# EUROPÄISCHE PATENTANMELDUNG

(11) **EP 1 614 879 A1**
(43) Veröffentlichungstag der Anmeldung: **11.01.2006**
(21) Anmeldenummer: 04015785.1
(22) Anmeldetag: 05.07.2004
(51) Int. Cl.: F02C 7/18, F01D 25/12

(54) **Verfahren zur Kühlung einer Gasturbine und Kühlluftsystem**

(71) Anmelder: SIEMENS AKTIENGESELLSCHAFT, 80333 München (DE)
(72) Erfinder: Kessler, Michael, 46147 Oberhausen (DE); Kutyniok, Dirk, 45470 Mühlheim (DE); Slaughter, Raymond, 45468 Mülheim (DE)

(57) **Zusammenfassung**

Bei einem erfindungsgemäßen Verfahren und einem Kühlluftsystem wird ein Luftgemisch (5) aus einer Umgebung (7) angesaugt, verdichtet und anschließend gefiltert, um Kühlluft für eine Komponente einer Gasturbine (15) bereit zu stellen.

## Beschreibung

Die Erfindung betrifft ein Verfahren zur Kühlung einer Gasturbine sowie ein Kühlluftsystem.

Bei vielen bekannten Gasturbinenanlagen ist eine hohe Luftreinheit des Luftgemisches erforderlich, welches einer Gasturbine, insbesondere zur Kühlung von Gasturbinenkomponenten zugeführt wird. Die Partikelgröße von im Luftgemisch vorhandenen Partikeln darf dabei eine maximal zulässige Partikelgröße nicht überschreiten.

Dieses strenge Erfordernis ist u.a. dadurch begründet, dass ein Kühlluftsystem, mittels welchem Gasturbinenkomponenten mit Kühlluft versorgt werden, üblicherweise sehr empfindlich auf Luftverunreinigungen durch Schmutzpartikel im Luftgemisch reagiert, da insbesondere korrosiv wirkende Luftverunreinigungen wie z.B. Salze, die durch Ansaugung von Meerwassertröpfchen im Luftgemisch enthalten sind, oder andere salzhaltige Staubteilchen über das Kühlluftsystem in die Gasturbine gelangen könnten.

Daher müssen Schmutzpartikel möglichst vollständig abgeschieden werden, was im Stand der Technik durch einen geeigneten, vom Ansaughaus umfassten Filter bewerkstelligt werden soll.

Derartige, bekannte Kühlluftsysteme dürfen daher niemals ohne installiertes Ansaugfilter im Ansaughaus in Betrieb genommen werden. Des Weiteren ist während der Lebensdauer der Gasturbine ein regelmäßiger Reinigungszyklus für das Filter im Ansaughaus durchzuführen, um die Anforderungen an die Luftreinheit ständig sicherzustellen.

Besonders in solchen Umgebungen, in denen sich in den Filtertaschen des Filters über lange Trockenzeiten hinweg salzhaltiger Staub ansammelt, besteht die Gefahr, dass bei sich an die Trockenzeit anschließender hoher Luftfeuchtigkeit oder bei Niederschlag die Salze gelöst werden und in sehr hoher Konzentration in die Gasturbine gelangen.

Der bisher erforderliche, im Ansaughaus installierte, Filter benötigt deshalb einen hohen Wartungsaufwand. Darüber hinaus verursacht dieser Filter einen hohen Druckverlust des angesaugten Luftgemisches, was zu einem verminderten Wirkungsgrad der Gasturbine führt.

Der Erfindung liegt daher die Aufgabe zugrunde, ein verbessertes Verfahren zur Kühlung einer Gasturbine sowie ein Kühlluftsystem anzugeben, welche wirtschaftlich betrieben werden können und die vorgenannten Nachteile möglichst weitgehend überwinden.

Bezüglich des Verfahrens wird die Aufgabe erfindungsgemäß gelöst durch ein Verfahren zur Kühlung einer Gasturbine mit folgenden Schritten:
1. Ansaugen eines Luftgemisches aus einer Umgebung
2. Verdichtung des Luftgemisches
3. Filtern des verdichteten Luftgemisches, und
4. Zuführen des gefilterten Luftgemisches zu mindestens einer Komponente der Gasturbine.

Die Erfindung geht dabei von der Überlegung aus, dass üblicherweise nicht die vollständige Menge an angesaugtem Luftgemisch mittels eines im Ansaughaus installierten Filters gereinigt werden muss, da meist nur ca. 20 bis 30 % der angesaugten Luftmenge zur Kühlung von Gasturbinenkomponenten verwendet und benötigt werden und lediglich dieser Anteil des Luftgemisches den eingangs genannten hohen Reinheitsanforderungen genügen muss.

Dadurch können die bisher verwendeten, im Ansaughaus installierten Filter, welche in ihren Dimensionen sehr groß und in ihrer Anschaffung sehr kostspielig sind, entfallen und stattdessen meist erheblich kleinere und kostengünstigere Filter nur für denjenigen Teil der angesaugten Luft vorgesehen werden, welcher für die Kühlluftversorgung benötigt wird.

Die dadurch bei der Errichtung des Ansaughauses eingesparten Kosten überwiegen die erforderlichen Mehrkosten, welche für die beim erfindungsgemäß ausgelegten Kühlluftsystem der Gasturbine vorzusehenden Filter aufzuwenden sind.

Bei der Erfindung ist nun im Vergleich zum Stand der Technik eine Filterung des Luftgemisches auf einem höheren Druckniveau vorgesehen und dabei wird üblicherweise auch nur ein Teil des angesaugten Luftgemisches dieser Filterung unterzogen. Dadurch werden Verluste infolge der Filterung reduziert, was zu einem erhöhten Wirkungsgrad der Gasturbine führt.

Bevorzugt erfolgt daher die Verdichtung des Luftgemisches direkt im Anschluss an dessen Ansaugen ohne vorheriges Filtern.

Bezüglich des Kühlluftsystems wird die Aufgabe erfindungsgemäß gelöst durch ein Kühlsystem mit
- einem Ansaughaus zum Ansaugen eines Luftgemisches aus der Umgebung,
- einem dem Ansaughaus nachgeschalteten Verdichter zum Verdichten des angesaugten Luftgemisches, und
- mindestens ein dem Verdichter nachgeschalteter Filter zur Filterung des verdichteten Luftgemisches.

Bevorzugt ist das Filter dabei in mindestens eine Kühlluftleitung geschaltet, mittels welcher dem Verdichter das verdichtete Luftgemisch entnehmbar ist.

Dabei ist das gefilterte Luftgemisch besonders vorteilhaft mittels einer Kühlluftleitung mindestens einer Komponente einer Gasturbine zuführbar.

Die Komponente der Gasturbine kann dabei mindestens eine Turbinenschaufel und/oder eine Brennkammerwand umfassen.

Im Folgenden wird ein Ausführungsbeispiel der Erfindung näher dargestellt.

Es zeigt:

FIG ein erfindungsgemäßes Kühlluftsystem.

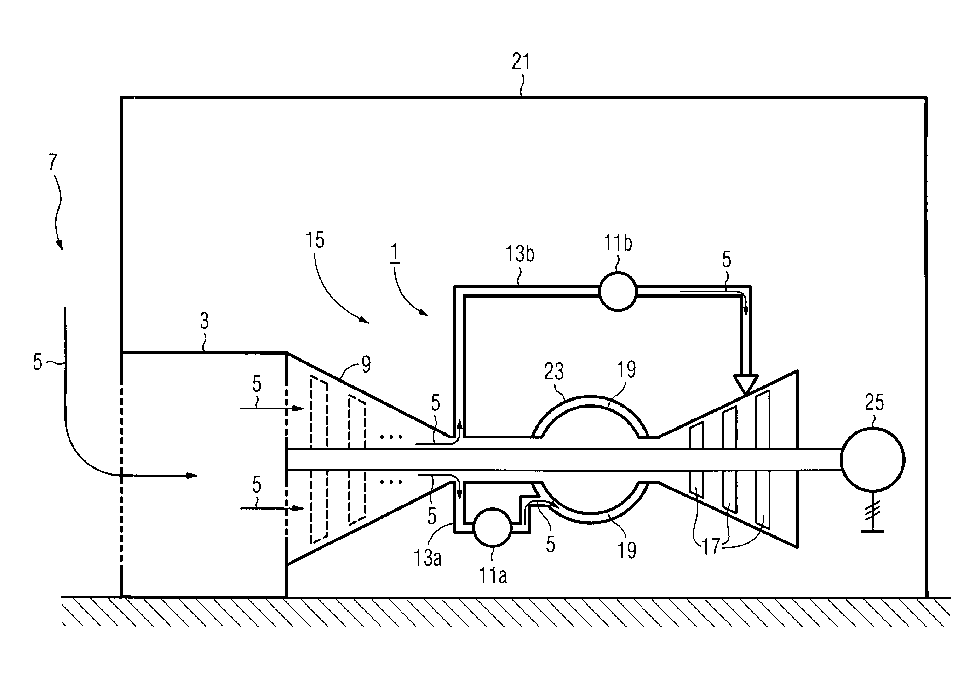

In der Figur ist ein Maschinenhaus 21 einer Kraftwerksanlage dargestellt, in welchem eine Gasturbine 15 umfassend ein erfindungsgemäßes Kühlluftsystem 1 installiert ist.

Zum Ansaugen eines Luftgemisches 5 aus einer Umgebung 7 ist ein Ansaughaus 3 vorgesehen.

Im vorliegenden Ausführungsbeispiel ist das Ansaughaus 3 als filterloses Ansaughaus ausgebildet, wonach innerhalb des Ansaughauses 3 keine Filterung des angesaugten Luftgemisches 5 vorgesehen ist.

Zum Erreichen eines benötigten Luftdrucks wird das Luftgemisch 5 einem Verdichter 9 zugeführt, welcher eine Anzahl an Verdichterstufen umfasst, beispielsweise zehn bis vierzehn.

Das verdichtete Luftgemisch 5 wird dem Verdichter 9 mittels Kühlluftleitungen 13a, 13b entnommen, welche das verdichtete Luftgemisch 5 einer Brennkammer 23 zur Kühlung deren Brennkammerwand 19 (Hinterwandkühlung) bzw. Turbinenschaufeln 17 zu deren Kühlung zuführen.

Zur Kühlung der Turbinenschaufeln 17 sind diese meist als Hohlkörper ausgebildet und die Kühlluft wird in das Innere der zu kühlenden Turbinenschaufeln geleitet.

Beide genannten Kühlungen können parallel oder alternativ vorgesehen sein.

Zur Erzeugung von elektrischer Energie ist ein Generator 25 an die Gasturbine 15 gekoppelt.

Zur Filterung des verdichteten Luftgemisches 5 sind in die Kühlluftleitungen 13a,13b Filter 11a,11b geschaltet, mittels welcher die für die Kühlung von Gasturbinenkomponenten erforderliche Luftreinheit realisierbar ist.

Die Kühlluftleitungen 13a,13b müssen nicht am Ausgang des Verdichters 9 angeordnet sein, so dass bereits vollständig verdichtete Luft zur Kühlung verwendet wird; vielmehr können die Kühlluftleitungen 13a und/oder 13b dem Verdichter 9 das verdichtete Luftgemisch 5 auch auf einem niedrigeren Druckniveau entnehmen.

Mittels der Kühlluftleitungen 13a und/oder 13b wird nur derjenige Anteil an verdichtetem Luftgemisch 5 entnommen, welcher zur Kühlung der betreffenden Gasturbinenkomponente erforderlich ist. Dies sind beispielsweise ca. 20 bis 30 % der Menge an angesaugtem Luftgemisch 5.

## Patentansprüche

1. Verfahren zur Kühlung einer Gasturbine, (15) **gekennzeichnet durch** folgende Schritte:
a) ansaugen eines Luftgemisches (5) aus einer Umgebung (9),
b) Verdichtung des Luftgemisches (5),
c) Filtern des verdichteten Luftgemisches (5), und
d) Zuführen des gefilterten Luftgemisches (5) zu mindestens einer Komponente einer Gasturbine (15).

2. Verfahren nach Anspruch 1,
**dadurch gekennzeichnet, dass**
die Verdichtung des Luftgemisches (5) direkt im Anschluss an dessen Ansaugen ohne vorheriges Filtern erfolgt.

3. Kühlluftsystem (1),
**gekennzeichnet durch**
- ein Ansaughaus (3) zum Ansaugen eines Luftgemisches (5)aus einer Umgebung (7),
- ein dem Ansaughaus (3) nachgeschalteter Verdichter (9) zum Verdichten des angesaugten Luftgemisches (5), und
- mindestens ein dem Verdichter (9) nachgeschaltetes Filter (11) zur Filterung des verdichteten Luftgemisches (5).

4. Kühlluftsystem (1) nach Anspruch 3,
**dadurch gekennzeichnet, dass**
das Filter (11) in mindestens eine Kühlluftleitung (13) geschaltet ist, mittels welcher dem Verdichter (9) das verdichtete Luftgemisch (5) entnehmbar ist.

5. Kühlluftsystem (1) nach Anspruch 4,
**dadurch gekennzeichnet, dass**
mittels der Kühllüftleitung (13) mindestens einer Komponente einer Gasturbine (15) das gefilterte Luftgemisch (5) zuführbar ist.

6. Kühlluftsystem (1) nach Anspruch 5,
**dadurch gekennzeichnet, dass**
die Komponente der Gasturbine (15) mindestens eine Turbinenschaufel (17) und/oder eine Brennkammerwand (19) umfasst.
